# FASCICULE DE BREVET EUROPEEN

(11) **EP 1 498 332 B1**
(45) Date de publication et mention de la délivrance du brevet: **01.03.2006**
(21) Numéro de dépôt: 04291484.6
(22) Date de dépôt: 14.06.2004
(51) Int. Cl.: B60T 8/00

(54) **Dispositif de protection contre les freinages intempestifs spécialement adapté à un frein électromécanique**
Vorrichtung für das Verhindern eines unbeabsichtigten Bremsens angepasst an eine elektromechanischen Bremse
Device for protection against accidental braking adapted to an electromechanical brake

(30) Priorité: 16.07.2003 FR 0308650
(43) Date de publication de la demande: 19.01.2005
(73) Titulaire: MESSIER BUGATTI, 78140 Velizy Villacoublay (FR)
(72) Inventeur: Sibre, Jérôme, 75015 Paris (FR)
(74) Mandataire: Jaunez, Xavier

(56) Documents cités:
- FR-A- 2 790 730
- US-B1- 6 513 885

## Description

L'invention concerne un dispositif de protection contre les freinages intempestifs spécialement adapté à un frein électromécanique.

### ARRIERE-PLAN DE L'INVENTION

Dans le domaine des freins hydrauliques, on peut citer le document FR-A-2 790 730, qui décrit un dispositif de protection contre les freinagese intempestifs incluant un système de sécurité comportant un trajet logiciel qui est configuré pour activer une vanne générale et un trajet matériel qui est configuré pour inhiber cette vanne générale. L'arrière-plan technologique est également illustré par le document US-A-6 513 885 qui enseigne un agencement de circuit de freinage redondant.

Les freins de type électromécanique comprennent quant à eux une pile de disques et un ou plusieurs actionneurs électromécaniques disposés en regard de la pile de disques, lesdits actionneurs comportant un poussoir pour presser la pile de disques. Le poussoir est actionné par un moteur électrique commandé par un module de commande de l'actionneur, qui, en réponse à une consigne de freinage générée par un calculateur de freinage, envoie un ordre de modulation de la puissance à un module de puissance qui délivre la puissance requise au moteur de l'actionneur.

En cas de défaillance du calculateur de freinage ou du module de commande de l'actionneur, il se peut que le poussoir soit astreint à presser les disques de façon intempestive, ce qui peut se révéler dangereux pour la sécurité du véhicule.

### OBJET DE L'INVENTION

L'invention a pour objet de proposer une protection améliorée contre les manoeuvres intempestives du poussoir d'un frein électromécanique.

### BREVE DESCRIPTION DE L'INVENTION

L'invention concerne un dispositif de protection contre les freinages intempestifs spécialement adapté à un frein électromécanique comprenant au moins un actionneur ayant un poussoir apte à être déplacé au moyen d'un moteur électrique commandé par un module de commande pour presser de façon commandée une pile de disques, ledit dispositif comportant selon l'invention un organe de sécurité pouvant être placé dans un premier état dans lequel il empêche le poussoir d'être déplacé par le moteur électrique et un second état dans lequel il laisse libre le poussoir d'être déplacé par le moteur électrique, l'organe de sécurité étant commandé par une logique de commande qui place par défaut l'organe de sécurité dans le premier état et ne place l'organe de sécurité dans le second état qu'en réponse à la présence simultanée d'un ordre provenant du module de commande et d'un signal de confirmation ne provenant pas du module de commande et indépendant de celui-ci.

Ainsi, une panne affectant le module de commande de l'actionneur ou l'étage de puissance commandé par le module de commande ne peut provoquer de déplacement du poussoir. On évite ainsi tout risque de freinage intempestif. Le dispositif de l'invention augmente donc grandement la sécurité du système de freinage du véhicule.

De préférence, dans une situation de freinage normal, le signal de confirmation est un signal de freinage actif en provenance d'un calculateur de freinage qui, par ailleurs, délivre une consigne de freinage au module de commande de l'actionneur.

De préférence encore, dans une situation de freinage d'urgence dans laquelle le calculateur de freinage est défaillant, le signal de confirmation est un signal de pédale en provenance d'une pédale de frein actionnée par le pilote.

Selon un premier mode de réalisation de l'invention, l'organe de sécurité est un organe de blocage mécanique du poussoir monté sur l'actionneur, par ailleurs destiné à bloquer l'actionneur en position de freinage de parc.

On profite donc de la présence de l'organe de blocage, qui avait été prévu pour une fonction totalement différente (immobilisation de l'aéronef au parking alors que les actionneurs ne sont pas alimentés), pour lui faire remplir une fonction nouvelle de blocage du poussoir, ce qui permet d'assurer une protection contre les freinages intempestifs.

De préférence, l'organe de blocage est un frein à manque de courant par ailleurs utilisé pour maintenir un effort de parc.

Selon un deuxième mode de réalisation de l'invention, l'organe de sécurité est un interrupteur de puissance disposé sur une ligne d'alimentation en puissance du moteur électrique de l'actionneur.

La coupure de l'alimentation du moteur empêche tout déplacement du poussoir quels que soient les ordres de déplacement délivrés par le module de commande.

### BREVE DESCRIPTION DES DESSINS

L'invention sera mieux comprise à la lumière de la description qui suit en référence aux figures des dessins annexés parmi lesquelles :
- la figure 1 est un schéma-bloc d'un circuit de freinage d'un aéronef équipé d'un dispositif de protection contre les freinages intempestifs selon un premier mode de réalisation de l'invention, faisant appel à un frein à manque de courant ;
- la figure 2 est un schéma d'une logique de commande du frein à manque de courant de ce premier mode de réalisation de l'invention illustré à la figure 1 ;
- la figure 3 est un schéma-bloc d'un circuit de freinage d'un aéronef équipé d'un dispositif de protection contre les freinages intempestifs selon un deuxième mode de réalisation de l'invention, faisant appel à un interrupteur de puissance.

### DESCRIPTION DETAILLEE DE L'INVENTION

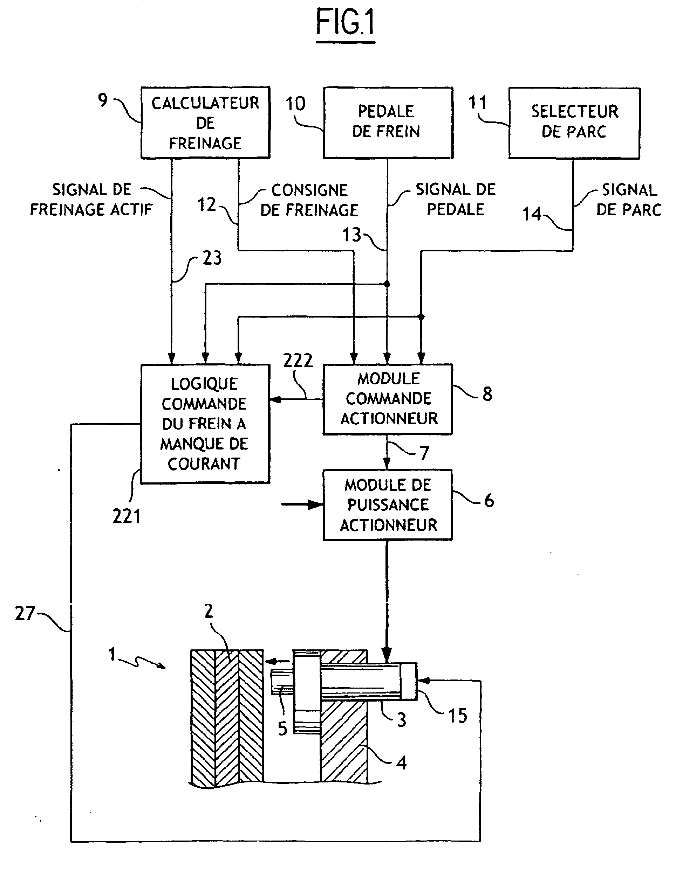

En référence à la figure 1, et de façon connue en soi, un frein électromécanique 1 d'aéronef comporte une pile de disques 2 comportant en alternance des disques solidaires en rotation de la roue à freiner et des disques fixes en rotation.

Le frein 1 comporte une pluralité d'actionneurs 3 (un seul est représenté ici) qui sont portés par une couronne 4 pour s'étendre en regard de la pile de disques 2. Chaque actionneur 3 comporte un poussoir 5 apte à être déplacé vers la pile de disques 2 pour presser celle-ci et ainsi générer un effort de freinage.

Le poussoir 5 est déplacé par un moteur électrique via une chaîne cinématique transformant un mouvement de rotation du moteur électrique en un mouvement de translation du poussoir 5.

Le moteur électrique est alimenté via un module de puissance de l'actionneur 6 qui délivre au moteur une puissance électrique en fonction d'un ordre 7 délivré par un module de commande de l'actionneur 8.

Les ordres délivrés par le module de commande de l'actionneur 8 sont élaborés à partir de divers signaux, venant en particulier d'un calculateur de freinage 9, d'une pédale de frein 10 et d'un sélecteur de parc 11.

L'ensemble du système de freinage de l'aéronef est ici prévu pour fonctionner en trois modes : un mode normal, un mode d'urgence, et un mode de parc.

Dans le mode normal, le module de commande de l'actionneur 8 génère un ordre 7 en fonction d'une consigne de freinage 12 reçue du calculateur de freinage 9.

Dans le mode d'urgence, dans lequel le calculateur de freinage est défaillant, le module de commande de l'actionneur 8 génère un ordre 7 en fonction d'un signal de pédale 13 représentatif de l'enfoncement de la pédale de frein 10 actionnée directement par le pilote.

Dans le mode de parc, prioritaire par rapport aux autres modes, le module de commande de l'actionneur 8 génère un ordre 7 de freinage de parc en réponse à un signal de parc 14 émis lors de l'actionnement du sélecteur de parc 11 par le pilote. Pour permettre un maintien du freinage de parc alors que l'aéronef est à l'arrêt, l'actionneur 3 est équipé d'un frein à manque de courant 15 qui, lorsqu'il n'est pas alimenté, bloque le poussoir 5 en position, en bloquant l'un des arbres de transmission de la chaîne cinématique entre le moteur électrique et le poussoir 5.

Il suffit dès lors de s'assurer que le frein à manque de courant 15 est alimenté, de commander le déplacement du poussoir 5 pour qu'il exerce sur la pile de disques un effort de parc, puis de couper l'alimentation du frein à manque de courant 15 pour bloquer l'actionneur en position de freinage de parc.

L'utilisation d'un frein à manque de courant en tant qu'organe de blocage est particulièrement adaptée car elle permet un maintien de l'effort de parc sans aucune consommation de courant.

Selon un premier mode de réalisation de l'invention illustré à la figure 1, l'équipement de sécurité contre les freinages intempestifs est constitué par le frein à manque de courant 15 lui-même.

On utilise alors un organe déjà existant pour lui faire remplir une nouvelle fonction, à savoir la protection contre les actionnements intempestifs.

Le frein à manque de courant est commandé par une logique de commande 221 qui, par défaut, coupe l'alimentation du frein à manque de courant 15, ce qui a pour effet de bloquer le poussoir 5.

La logique de commande 221 est agencée pour alimenter le frein à manque de courant 15 (et donc débloquer le poussoir 5) uniquement en réponse à un ordre de déblocage 222 provenant du module de commande de l'actionneur 8, confirmé par un signal de confirmation ne provenant pas du module de commande de l'actionneur 8 et indépendant de celui-ci.

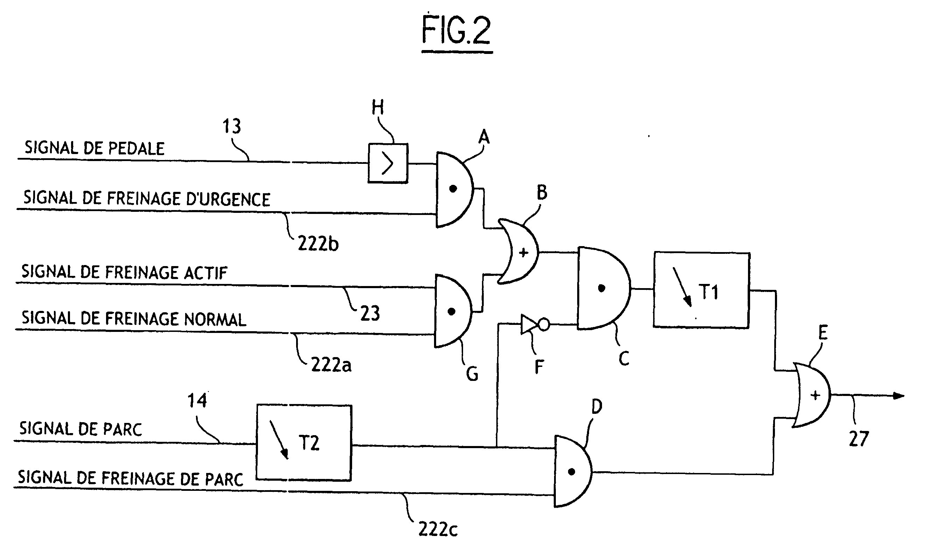

En référence à la figure 2, la logique de commande 221 du frein à manque de courant 15 génère un signal de commande 27 du frein à manque de courant 15 à partir des signaux suivants :
- des ordres de déblocage 222 provenant du module de commande de l'actionneur 8 et constitués, selon le mode de fonctionnement dans lequel se trouve le système de freinage de l'aéronef, d'un signal de freinage normal 222a, d'un signal de freinage d'urgence 222b, ou d'un signal de freinage de parc 222c ;
- le signal de freinage actif 23, généré par le calculateur de freinage 9 ;
- le signal de pédale 13 en provenance d'un potentiomètre équipant la pédale de frein 10 située dans le cockpit et actionnée par le pilote;
- le signal de parc 14 en provenance du sélecteur de parc 11 situé dans le cockpit et actionné par le pilote.

Grâce à ces signaux, la logique de commande 221 du frein à manque de courant 15 permet de gérer ce dernier aussi bien pour assurer le freinage de parc que pour assurer selon l'invention un verrouillage de l'actionneur lorsque celui-ci est inactif, afin d'éviter tout freinage intempestif.

La logique de commande 221 du frein à manque de courant 15 est détaillée ci-dessous.

Concernant tout d'abord le freinage de parc, l'ensemble fonctionne de la façon suivante. L'enclenchement du sélecteur de parc 11 par le pilote génère un signal de parc 14. Dès cet enclenchement, le module de commande de l'actionneur 8 génère un signal de freinage de parc 222c. Le signal de parc 14 et le signal de freinage de parc 222c sont traités par la porte ET référencée D pour générer (via la porte OU référencée E) un signal de commande 27. Ainsi alimenté, le frein à manque de courant déverrouille l'actionneur.

Le module de commande de l'actionneur 8 génère alors un ordre 7 à destination du module de puissance de l'actionneur 6 afin de provoquer le déplacement du poussoir 5 pour appliquer sur la pile de disques 2 un effort de parc déterminé. Une fois cet effort de parc appliqué, le module de commande de l'actionneur 8 inverse le signal de freinage de parc 222c, ce qui coupe l'alimentation du frein à manque de courant 15. Ainsi privé d'alimentation, le frein à manque de courant 15 verrouille l'actionneur. Le module de commande de l'actionneur 8 interrompt alors l'ordre 7 à destination du module de puissance de l'actionneur 6.

L'effort de parc est ainsi maintenu sans aucune consommation électrique ni de l'actionneur 3 ni du frein à manque de courant 15.

Dès le désenclenchement du sélecteur de parc 11 par le pilote, le module de commande de l'actionneur 8 génère un ordre 7 à destination du module de puissance de l'actionneur 6, de sorte que le poussoir 5 exerce sur la pile de disques 2 un effort équivalent à l'effort de parc, puis le module de commande de l'actionneur 8 génère un signal de freinage parc 222c.

Une temporisation T2, active uniquement lorsque le sélecteur de parc 11 passe de l'état enclenché à l'état désenclenché, retarde le changement d'état du signal de parc 14.

Ainsi, ledit signal reste encore à son ancienne valeur de sorte que la génération du signal de freinage parc 222c par le module de commande de l'actionneur 8 suffit donc, via les portes D et E, à générer un signal de commande 27 qui permet l'alimentation du frein à manque de courant 15. Ainsi alimenté, le frein à manque de courant 15 déverrouille l'actionneur.

Puis le module de commande de l'actionneur 8 génère un ordre 7 à destination du module de puissance de l'actionneur 6 afin d'éloigner le poussoir 5 de la pile de disques 2. Une fois le poussoir éloigné, le module de commande de l'actionneur 8 inverse le signal de freinage parc 222c, ce qui a pour effet d'interrompre l'alimentation du frein à manque de courant 15. Ainsi privé d'alimentation, le frein à manque de courant 15 verrouille l'actionneur.

La temporisation T2 est utile pour laisser le temps au module de commande de l'actionneur 8 de procéder au retrait du poussoir 5. En effet, si le signal traité par la porte D passait immédiatement à une valeur représentative du désenclenchement de l'actionneur, la sortie de la porte D deviendrait immédiatement nulle et provoquerait un verrouillage immédiat de l'actionneur. Le module de commande de l'actionneur 8 n'aurait alors pas le temps de procéder au retrait du poussoir 5.

En lieu et place de la temporisation, on aurait pu également envisager de conditionner l'inversion du signal de parc 222c en fonction d'un signal indicatif du retrait du poussoir, en provenance du module de commande de l'actionneur 8. Mais le souci de séparer totalement la gestion de l'actionneur 3 de la gestion du frein à manque de courant 15 a conduit à préférer ici l'utilisation d'une temporisation.

Selon l'invention, on utilise le frein à manque de courant 15 non seulement pour le freinage de parc, mais également pour protéger l'aéronef contre les freinages intempestifs lorsque le système de freinage est en mode de freinage normal ou en mode de freinage d'urgence.

Lors du fonctionnement en mode de freinage normal, le module de commande de l'actionneur 8 génère un signal de freinage normal 222a. Lorsque le calculateur de freinage 9 envoie une consigne de freinage 12 au module de commande de l'actionneur 8, il génère en même temps un signal de freinage actif 23.

Le signal de freinage normal 222a et le signal de freinage actif 23 sont traités par une porte ET référencée G, dont la sortie est traitée par la porte OU référencée B et la porte ET référencée C, puis enfin par la porte OU référencée E pour générer une commande 27 d'alimentation du frein à manque de courant 15.

La sortie de la porte B est traitée au niveau de la porte C avec un signal qui provient de la porte NON référencée F qui a pour fonction d'inverser le signal de parc 14, de sorte que la sortie de la porte C est positive uniquement si le signal de parc 14 est dans un état indiquant que le sélecteur de parc 11 est désenclenché.

Cette disposition permet de rendre le signal de parc 14 prioritaire par rapport aux autres signaux. Ainsi, l'enclenchement du sélecteur de parc 11 inhibe toute autre procédure que celle conduisant à l'application de l'effort de parc détaillée précédemment.

On supposera donc pour la suite que le signal de parc 14 est nul, indiquant ainsi que le sélecteur de parc 11 est désenclenché.

Dans ce cas, la présence du signal de freinage actif 23 permet la génération d'un signal de commande 27 d'alimentation du frein à manque de courant 15. Ainsi alimenté, le frein à manque de courant 15 déverrouille l'actionneur, ce qui permet au module de commande de l'actionneur 8 de commander le freinage en fonction de la consigne de freinage 12 issue du calculateur de freinage 9.

Une fois l'action de freinage effectuée, le calculateur de freinage 9 annule le signal de freinage actif 23. Les mêmes portes G,B,C,E inversent le signal de commande 27, ce qui interrompt l'alimentation du frein à manque de courant 15. Ainsi privé d'alimentation, le frein à manque de courant 15 verrouille donc l'actionneur. Ce verrouillage empêche tout déplacement du poussoir 5, et donc tout freinage intempestif.

Une temporisation T1 permet de laisser le temps au module de commande de l'actionneur 8 de procéder au retrait du poussoir 5 avant que n'intervienne le verrouillage de l'actionneur.

Encore une fois, une temporisation est préférée à une combinaison avec un signal indicatif de la position du poussoir ou du fonctionnement de l'actionneur, pour des raisons de ségrégation entre la gestion de l'actionneur et celle du frein à manque de courant.

Enfin, en fonctionnement en mode d'urgence, lorsque le calculateur de freinage 9 est défaillant, le module de commande de l'actionneur 8 génère un signal de freinage d'urgence 222b qui est traité par une porte ET référencée A située en amont de la porte B. Ce signal permet de provoquer la génération d'un signal de commande 27 d'alimentation du frein à manque de courant 15 lorsqu'un signal de pédale 13 est généré par une action du pilote sur la pédale de frein 10. Pour éviter de déverrouiller inutilement le frein à manque de courant 15, un comparateur référencé H permet de prendre en compte le signal de pédale 13 uniquement s'il dépasse un seuil prédéterminé.

Une fois le freinage effectué, c'est-à-dire quand le signal de pédale 13 redescend sous le seuil du comparateur H, le signal de commande 27 est annulé, ce qui interrompt l'alimentation du frein à manque de courant 15. Ainsi privé d'alimentation, le frein à manque de courant 15 verrouille donc l'actionneur. La temporisation T1 permet au module de commande de l'actionneur 8 de provoquer entre-temps le retrait du poussoir 5.

Ce verrouillage empêche tout déplacement du poussoir 5, et donc tout freinage intempestif dû à un dysfonctionnement du calculateur de freinage ou du module de commande.

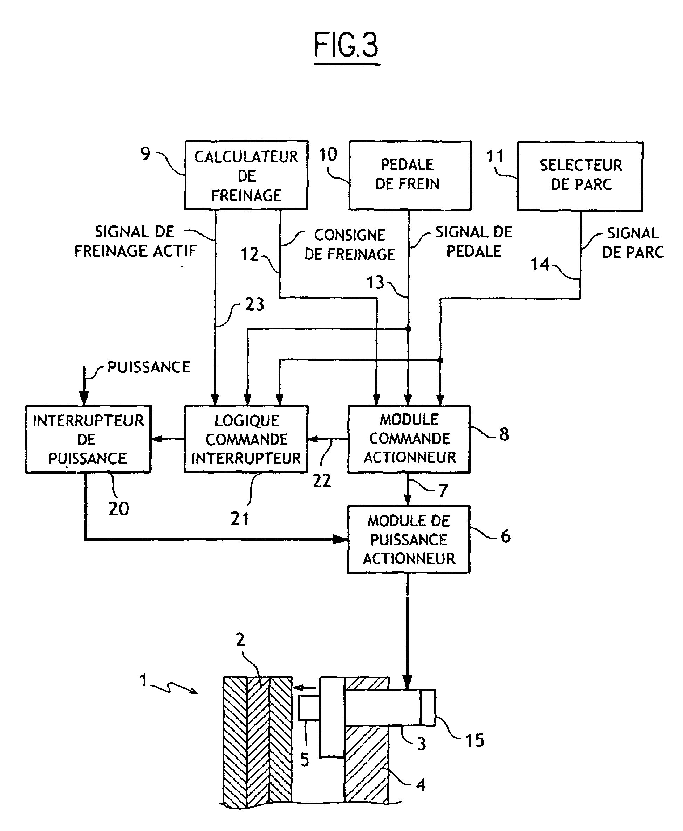

Selon un deuxième mode de réalisation de l'invention illustré à la figure 3, on équipe le système de freinage d'un équipement de sécurité consistant en un interrupteur de puissance 20 commandé par une logique de commande de l'interrupteur 21.

La logique de commande de l'interrupteur 21 place par défaut l'interrupteur 20 dans un état ouvert pour lequel le module de puissance de l'actionneur 6 n'est pas alimenté. Dans cet état, le poussoir 5 de l'actionneur 3 ne peut se déplacer en réponse à un ordre du module de commande de l'actionneur 8.

La logique de commande de l'interrupteur 21 est agencée pour placer l'interrupteur 20 dans un état fermé uniquement en réponse à un ordre de fermeture 22 provenant du module de commande de l'actionneur 8, confirmé par un signal de confirmation ne provenant pas du module de commande de l'actionneur 8 et indépendant de celui-ci.

Selon le mode de fonctionnement dans lequel se trouve le système de freinage de l'aéronef, le signal de confirmation précité peut être émis par différents organes.

En mode normal, le signal de confirmation est un signal de freinage actif 23 émis par le calculateur de freinage 9, qui indique que le calculateur de freinage est en train d'émettre une consigne de freinage qui impose un déplacement du poussoir 5. Ce signal de freinage actif peut être tout simplement la consigne de freinage 12 elle-même, ou être élaborée à partir de la consigne de freinage. Ainsi, dans toutes les phases où la consigne de freinage 23 est nulle, l'interrupteur de puissance 20 est dans un état ouvert et l'actionneur 3 n'est pas alimenté, ce qui évite tout déplacement intempestif du poussoir 5.

En mode d'urgence, le signal de confirmation est le signal de pédale 13. De la même façon, dans toutes les phases où la pédale de frein n'est pas actionnée, l'interrupteur de puissance 20 est dans un état ouvert et l'actionneur 3 n'est pas alimenté, ce qui évite tout déplacement intempestif du poussoir 5.

L'interrupteur de puissance 20 a ici été placé en amont du module de puissance de l'actionneur 6, mais il pourrait également être placé en aval de celui-ci.

L'invention n'est pas limitée aux modalités particulières de l'invention qui viennent d'être décrites, mais bien au contraire englobe toute variante entrant dans le cadre de l'invention tel que défini par les revendications.

En particulier; bien que dans les deux modes de réalisation, la protection contre les freinages intempestifs soit réalisée à l'aide d'un seul organe de sécurité, on pourrait, pour accroître encore plus la sécurité de l'aéronef, prévoir deux organes de sécurité fonctionnant de façon parallèle, en équipant par exemple le dispositif de freinage illustré à la figure 1 de l'interrupteur de puissance illustré à la figure 3.

## Revendications

1. Dispositif de protection contre les freinages intempestifs spécialement adapté à un frein électromécanique comprenant au moins un actionneur (3) ayant un poussoir (5) apte à être déplacé au moyen d'un moteur électrique commandé par un module de commande (8) pour presser de façon commandée une pile de disques (2), **caractérisé en ce que** le dispositif comporte un organe de sécurité (15 ;20) pouvant être placé dans un premier état dans lequel il empêche le poussoir (5) d'être déplacé par le moteur électrique et un second état dans lequel il laisse le poussoir (5) libre d'être déplacé par le moteur électrique, l'organe de sécurité (15 ;20) étant commandé par une logique de commande (221 ;21) qui place par défaut l'organe de sécurité (15 ;20) dans le premier état et ne place l'organe de sécurité dans le second état qu'en réponse à la présence simultanée d'un ordre (222 ;22) provenant du module de commande (8) et d'un signal de confirmation (13 ;14 ;23) ne provenant pas du module de commande (8) et indépendant de celui-ci.

2. Dispositif selon la revendication 1, **caractérisé en ce que**, dans une situation de freinage normal, le signal de confirmation est un signal de freinage actif (23) en provenance d'un calculateur de freinage (9) qui, par ailleurs, délivre une consigne de freinage (12) au module de commande (8) de l'actionneur.

3. Dispositif selon la revendication 2, **caractérisé en ce que**, dans une situation de freinage d'urgence où le calculateur de freinage (9) est défaillant, le signal de confirmation est un signal de pédale (13) en provenance d'une pédale de frein (10) actionnée par le pilote.

4. Dispositif selon l'une des revendications 1 à 3, **caractérisé en ce que** l'organe de sécurité est un organe de blocage (15) du poussoir (5) monté sur l'actionneur, par ailleurs destiné à bloquer l'actionneur en position de freinage de parc.

5. Dispositif selon la revendication 4, **caractérisé en ce que** l'organe de blocage est un frein à manque de courant (15) .

6. Dispositif selon l'une des revendications 1 à 3, **caractérisé en ce que** l'organe de sécurité est un interrupteur de puissance (20) disposé sur une ligne d'alimentation en puissance de l'actionneur.

## Patentansprüche

1. Vorrichtung zum Schutz vor ungewollten Bremsungen, die speziell an eine elektromechanische Bremse angepasst ist, die mindestens einen Aktuator (3) umfasst, der einen Stößel (5) hat, der dazu geeignet ist, mittels eines Elektromotors bewegt zu werden, der von einem Steuermodul (8) gesteuert wird, um auf gesteuerte Weise einen Stapel Scheiben (2) zusammenzudrücken, **dadurch gekennzeichnet, dass** die Vorrichtung ein Sicherheitselement (15; 20) umfasst, das in einen ersten Zustand gebracht werden kann, in dem es verhindert, dass der Stößel (5) von dem Elektromotor bewegt wird, sowie in einen zweiten Zustand, in dem es den Stößel (5) frei für eine Bewegung durch den Elektromotor lässt, wobei das Sicherheitselement (15; 20) von einer Steuerlogik (221; 21) gesteuert wird, die das Sicherheitselement (15; 20) vorgabemäßig in den ersten Zustand bringt und das Sicherheitselement nur in Antwort auf das gleichzeitige Vorhandensein eines Befehls (222; 22), der aus dem Steuermodul (8) stammt, und eines Bestätigungssignals (13; 14; 23), das nicht aus dem Steuermodul (8) stammt und unabhängig von demselben ist, in den zweiten Zustand bringt.

2. Vorrichtung nach Anspruch 1, **dadurch gekennzeichnet, dass** in einer normalen Bremssituation das Bestätigungssignal ein aktives Bremssignal (23) aus einem Bremsrechner (9) ist, der ferner einen Bremseinstellwert (12) an das Steuermodul (8) des Aktuators liefert.

3. Vorrichtung nach Anspruch 2, **dadurch gekennzeichnet, dass** in einer Notbremssituation, in der der Bremsrechner (9) versagt, das Bestätigungssignal ein Pedalsignal (13) von einem Bremspedal (10) ist, das von dem Piloten betätigt wird.

4. Vorrichtung nach einem der Ansprüche 1 bis 3, **dadurch gekennzeichnet, dass** das Sicherheitselement ein Element (15) zur Blockierung des an dem Aktuator angebrachten Stößels (5) ist, das ferner dazu bestimmt ist, den Aktuator in der Parkbremsposition festzustellen.

5. Vorrichtung nach Anspruch 4, **dadurch gekennzeichnet, dass** das Blockierungselement eine stromlose Bremse (15) ist.

6. Vorrichtung nach einem der Ansprüche 1 bis 3, **dadurch gekennzeichnet, dass** das Sicherheitselement ein Leistungsschalter (20) ist, der an einer Leistungsversorgungsleitung des Aktuators angeordnet ist.

## Claims

1. A device for providing protection against untimely braking, the device being specially adapted to an electromechanical brake including at least one actuator (3) having a pusher (5) suitable for being displaced by means of an electric motor controlled by a control module (8) so as to press in controlled manner against a stack of disks (2), the device being **characterized in that** it comprises a safety member (15; 20) suitable for being placed in a first state in which it prevents the pusher (5) from being displaced by the electric motor, and a second state in which it leaves the pusher (5) free to be displaced by the electric motor, the safety member (15; 20) being controlled by a control logic circuit (221; 21) which by default places the safety member (15; 20) in the first state and places the safety member in the second state only in response to the simultaneous presence of an order (222; 22) coming from the control module (8) and a confirmation signal (13; 14; 23) that does not come from the control module (8) and that is independent thereof.

2. A device according to claim 1, **characterized in that**, in a normal braking situation, the confirmation signal is an active braking signal (23) coming from a braking computer (8), which also serves to deliver a braking reference signal (12) to the actuator control module (8).

3. A device according to claim 2, **characterized in that**, in an emergency braking situation where the braking computer (9) is faulty, the confirmation signal is a pedal signal (13) coming from a brake pedal (10) actuated by the pilot.

4. A device according to any one of claims 1 to 3, **characterized in that** the safety member is a member (15) for blocking the pusher (5) mounted on the actuator, and also serving to block the actuator in a parking brake position.

5. A device according to claim 4, **characterized in that** the blocking member is a power-failure brake (15).

6. A device according to any one of claims 1 to 3, **characterized in that** the safety member is a power switch (20) placed in a power supply line of the actuator.
